# EUROPEAN PATENT SPECIFICATION

(11) **EP 2 470 473 B1**
(45) Date of publication and mention of the grant of the patent: **20.12.2017**
(21) Application number: 10812298.7
(22) Date of filing: 26.08.2010
(51) Int. Cl.: C01B 32/956, C04B 35/626, C04B 35/565, C04B 35/573, B82Y 30/00, C04B 35/634

(54) **METHOD FOR MANUFACTURING SILICON CARBIDE PULVERULENT BODY**
VERFAHREN EINES PULVERFÖRMIGEN SILICIUMCARBIDELEMENTS
PROCÉDÉ POUR LA FABRICATION D'UN CORPS PULVÉRULENT EN CARBURE DE SILICIUM

(30) Priority: 26.08.2009 KR 20090079379; 27.08.2009 KR 20090080014
(43) Date of publication of application: 04.07.2012
(73) Proprietor: LG Innotek Co., Ltd., Seoul, 04637 (KR)
(72) Inventor: KIM, Byungsook, Seoul 100-714 (KR); HAN, Jungeun, Seoul 100-714 (KR); KIM, Sangmyung, Seoul 100-714 (KR)
(74) Representative: Novagraaf Technologies
(86) International application number: PCT/KR2010/005753
(87) International publication number: WO 2011/025285

(56) References cited:
- EP-A2- 0 603 888
- EP-A2- 0 677 496
- WO-A1-2008/018782
- WO-A2-2008/054415
- JP-A- 9 208 210
- JP-A- 2000 351 614
- JP-A- 2001 130 909
- JP-A- 2001 130 909
- US-A- 5 021 230
- US-B1- 6 627 169

## Description

### Technical Field

The present invention relates to a method and a system for manufacturing silicon carbide pulverulent body.

### Background Art

SiC (silicon carbide) and boron (B) are reinforced material having a higher tensile ratio. While Al₂O₃ is a representative of oxidant ceramics, SiC is widely used as a representing one of non-oxidant ceramics. SiC fiber, being reinforced material formed of ceramic and metal composite material, is vigorously explored in its use, and boron fiber is mainly used as epoxy reinforced material of high-end performance.

In particular, SiC having an excellent physical property is definitely to be plentifully used reinforced material, in a case only a cost problem more expensive than other reinforced material is solved.

SiC, as composite material, is one of the most essential carbides in a ceramic field.

In silicon carbide, β-phase having a cubic crystal structure and α-phase having a hexagonal crystal structure exist. β-phase is secure at a temperature range of 1400-1800°C, and α-phase is formed at more than 2000°C.

The molecular weight of SiC is 40.1, its specific gravity is 3.21, and it is decomposed around 2500°C and over.

Since a pressure-less sintering was first succeeded in 1970s by U.S.A. G.E.'s Prochazka by the addition of boron and carbon, silicon carbide (SiC) has considerable high-temperature strength, has a superior property in anti-wear, anti-oxidation, anti-corrosion, creep resistance, etc. and thus draws attention as high-temperature structure material, and is currently extensively used high-level ceramic substance for such as a mechanical seal, a bearing, each kind of nozzle, a high-temperature cutting tool, an anti-fire plate, an abrasive, a reductant in steelmaking, and a lightning arrester.

In the prior art technology making such SiC pulverulent body, there exist an Acheson method, a direct reaction, a liquid polymer pyrolysis, and a high-temperature self-propagating synthesis and the like.

Such conventional technologies manufacture silicon carbide by mixing a solid state silicon source, for example, SiO₂ and Si, and a carbon source such kind as carbon and graphite and heat-processing thereof at 1350°C through 2000°C. Such conventional technologies accompany a problem in SiC pulverulent body recovery rate, and have limits per purity and a relatively high composite temperature. For instance, the American patent US 5,021,230 discloses a method for manufacturing silicon carbide by reacting SiO powder and carbon, and heating the mixture above 1400°C. Furthermore, the European Patent Application EP0677496 discloses a method for manufacturing silicone carbide by reacting silicon monoxide (SiO) grains and activated carbon in a molar ration C:Si of 0,37:1. The American patent US 6,627,169 discloses a method for manufacturing silicon carbide by reacting containing compound such as SiO with a carbon containing compound at a temperature of 800°C to 1000°C, for 30 to 120 minutes, with a molar C:Si ratio of 2-2,25 or 3. At last, the European Patent Application EP0603888 discloses a method for manufacturing silicon carbide by reacting silicone monoxide (SiO) powder and porous carbon fibers with a molar ratio C:Si of 0,37, at a temperature of 1300°C for 2 hours.

Furthermore, because silicon carbide is difficult to manufacture in bulk and needs additional processes such as a classification cleaning, there is a weak point that the cost of a manufactured carbon silicon pulverulent body is expensive due to a longer-taken manufacture time.

Thus, there is a desperate need of a manufacturing method of producing carbon silicon pulverulent body less low-costly and thus-way manufactured, high-purity, even carbon silicon pulverulent body, in a structure of importing overall amounts from abroad like our country.

### Disclosure of Invention

### Technical Problem

The present invention is intended to provide a high-purity carbon silicon pulverulent body manufacturing method and system capable of manufacturing carbon silicon pulverulent body non-expensively and easily.

Further, the present invention is to provide a method of manufacturing carbon silicon pulverulent body that can decrease a reaction energy needed for the production of carbon silicon pulverulent body in order to lower a heat-processing temperature, shorten a process time as well as obtain a higher recovery ratio.

### Solution to Problem

The present invention is related to a silicon carbide pulverulent body manufacturing method, including the step (a) of producing a silicon carbide raw material mixture by mixing SiO powder and carbon sources in a mixer; and the step (b) of obtaining silicon carbide pulverulent body by heat-processing the mixture at a temperature of 1400°C and over and 1700°C and less and for 30 minutes and over and 7 hours and less in a crucible characterized in that in the step (a), a mixing ratio of carbon versus silicon is characteristically 1.3 and over and 1.8 and less.

Also, the carbon source of the step (a) is characteristically carbon black.

In particular, between the step (a) and the step (b), the method further includes a step (1) of recovering a silicon carbide mixture by filtering the balls for a ball mill out using a sieve, and a step (2) of measuring the recovered mixture in a graphite crucible, wherein the step (a) uses a ball mill as a mixer, characterized by the step of producing a silicon carbide mixture by mixing SiO, carbon sources, and balls for a ball mill.

Also, the crucible material in the step (b) is graphite, characterized by filling vacuum or inert gas in an inner space.

### Advantageous Effects of Invention

The present invention can be manufactured compared to an existing silicon carbide pulverulent body manufacturing method at low pressure and low temperature, can save a process cost and easily obtain high-purity silicon carbide pulverulent body.

The present invention can lower a temperature and shorten time in a heat-processing process in the synthesis of silicon carbide pulverulent body, and enhance a recovery ratio of silicon carbide pulverulent body over a general silicon compound use process.

### Brief Description of Drawings

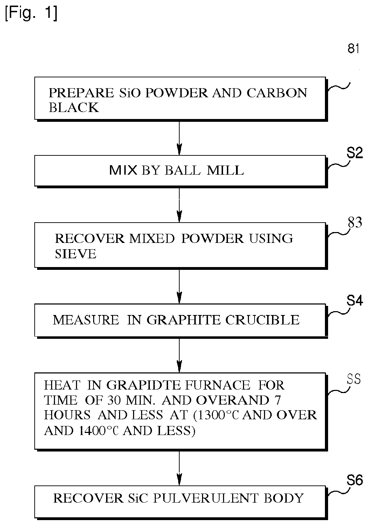

FIG. 1 is a flow chart of a silicon carbide pulverulent body manufacturing method according to another preferred embodiment of the invention.

### Best Mode for Carrying out the Invention

Hereinafter, a silicon carbide pulverulent body manufacturing method and system according to one preferred embodiment will be demonstrated in detail in consideration of the annexed drawings. However, in describing the embodiments, a specific description about related well-known functions or constructions will be omitted in a case it is

FIG. 1 is a flow chart of a silicon carbide pulverulent body manufacturing method according to another preferred embodiment of the invention.

Referring to FIG. 1, SiO powder and carbon black are prepared (S1).

SiO is in-process material of SiO₂ and C. Here, carbon black is used as carbon sources but not necessarily limited to this. For example, solid carbon such as carbon-nano tube, fullerene or organic compounds having a higher remaining carbon ratio, in detail, monomer or prepolymer such as penol resin, franc resin, xylene resin, polyimide, polyurethane, polyacrylonitrile, polyvinyl alcohol and poly acetic acid vinyl, cellulose, manufactured sugar, pitch, tar, and their mixtures may be used.

Such prepared SiO powder and carbon black powder are mixed into a mixer, that is, a ball mill (S2). Here, a mixing ratio of SiO and C is theoretically most ideal when a ratio of C : Si is 2 : 1. However, because SiO is actually volatized while gassificated, a ratio of C : Si is desirable to be 1.3 : 1 and over and 1.8 : 1 and less. Also, in order to prevent the clot of silicon carbide pulverulent body mixed in a ball mill, balls for a ball mill are mixed together. Such balls for a ball mill can use a nylon ball, a urethane ball, a teflon ball and the like.

Thereafter, silicon carbide raw material powder mixed in a ball mill is recovered using a sieve (S3). Here, a sieve may use a metal sieve or a poly-sieve. Balls for a ball mill are filtered out using such a sieve and a silicon carbide pulverulent body may be recovered only.

And next, a silicon carbide pulverulent body raw material mixture filtered out at S3 is measured in a graphite crucible (S4). A reason for measurements is to understand a manufacturing efficiency by measuring the amount of a final silicon carbide raw material mixture entered into a heating furnace.

And next, silicon carbide pulverulent body is synthesized by heating in a graphite furnace for the time of 30 min. and over and 7 hours and less at a temperature of 1400°C and over and 1700°C and less (S5).

A synthesis procedure of silicon carbide pulverulent body taken place within such a graphite furnace is presented as in Reaction 1 below.

[Chemistry Figure 1]
[Chem. 1]
SiO + C → Si + CO
Si + C → SiC
-----------------------
SiO + 2C → SiC + CO

In this case, the inner part of a graphite furnace is filled with vacuum or inert gas (for example, argon (Ar), hydrogen (H), etc.).

Thereafter, silicon carbide pulverulent body is finally recovered (S6).

Improved facts pursuant to the present invention described above are indicated in Table 2 below.

**Table 2**

| | Comparison Example | Example |
|---|---|---|
| Temperature | 1650 | 1400 |
| Time | 5 | 3 |
| Recovery ratio | 30% | 53% |
| Grain size (D50) | 1.4*µ*m | 1.3*µ*m |

Referring to Table 2, a comparison example indicates a prior art, for silicon compound SiO₂ is used, and for carbon compound carbon black is used. These mixtures are comprised of a ratio of 2.5: 1 smaller than 3:1, that is a theoretical mixture ratio of the existing SiO₂ and C in a ball mill. Also, a SiC crystal peak is confirmed therein by XRD (X-ray diffraction) after 5-hour heat-processing at 1650°Cin a crucible.

Also, the example uses SiO as a silicon compound and carbon black as a carbon compound by a manufacturing process according to the invention. This mixture of C:Si is mixed at a ratio of 1.8 : 1 by C : Si in a ball mill. Also, after 3-hour heat-processing at 1400°C in a crucible, a SiC crystal peak is confirmed therein by XRD.

As shown from a test result, the present invention has lowered a heating temperature by 200°C from 1650°C to 1400°C and shortened a time by 2 hours. Also, a recovery ratio of silicon carbide pulverulent body has ratchets up from 30% to 50%, and in a grain size (D50) also, finer pulverulent body may be obtained from 1.4*µ*m to 1.3*µ*m.

Thus, a higher recovery ratio and a fine silicon carbide pulverulent body due to a more efficient process may be obtained.

### Industrial Applicability

The present invention can provide a silicon carbide pulverulent body manufacturing method and system capable of being manufactured by a low pressure and a low temperature and saving a process cost.

### [Figure 1]

S1: PREPARE SiO POWDER AND CARBON BLACK
S2: MIX BY BALL MILL
S3: RECOVER MIXED POWDER USING SIEVE
S4: measure in graphite crucible
S5: HEAT IN GRAPHITE FURNACE FOR TIME OF 30 MIN. AND OVER AND 7 HOURS AND LESS AT (1300°CAND OVER AND 1400°CAND LESS)
S6: RECOVER SiC PULVERULENT BODY

## Claims

1. A silicon carbide pulverulent body manufacturing method, including :
• a step (a) of producing a silicon carbide raw material mixture by mixing of SiO powder and carbon sources in a mixer; and
• a step (b) of obtaining silicon carbide pulverulent body by heat-processing the mixture at a temperature of 1400°C and more and 1700°C and less and for 30 minutes and over and 7 hours and less in a crucible,
**characterized in that**, in step (a), a mixing mole ratio of carbon (C) versus silicon (Si) is 1.3 and over and 1.8 and less.

2. The method as claimed in claim 1, **characterized in that** in the step (a), the carbon source is carbon black.

3. The method as claimed in claim 1, **characterized in that** the method, between the step (a) and the step (b), further includes a step (1) of recovering the silicon carbide raw material mixture by filtering the balls for a ball mill out using a sieve; and
a step (2) of measuring the amount of the recovered mixture in a graphite crucible, wherein the step (a) uses a ball mill as a mixer, **characterized by** the step of producing a silicon carbide mixture by mixing SiO, carbon sources, and balls for a ball mill.

## Patentansprüche

1. Herstellungsverfahren für einen pulverförmigen Siliciumcarbidkörper, beinhaltend:
- einen Schritt (a) des Produzierens einer Siliciumcarbidrohmaterialmischung durch Mischen von SiO-Pulver und Kohlenstoffquellen in einem Mischer; und
- einen Schritt (b) des Erhaltens eines pulverförmigen Siliciumcarbidkörpers durch Wärmebehandeln der Mischung bei einer Temperatur von 1400 °C und mehr und 1700 °C und weniger und für 30 Minuten und darüber und 7 Stunden und weniger in einem Tiegel,
**dadurch gekennzeichnet, dass** in Schritt (a) ein Mischungsmolverhältnis von Kohlenstoff (C) zu Silicium (Si) 1,3 und darüber und 1,8 und weniger beträgt.

2. Verfahren nach Anspruch 1, **dadurch gekennzeichnet, dass** in dem Schritt (a) die Kohlenstoffquelle Ruß ist.

3. Verfahren nach Anspruch 1, **dadurch gekennzeichnet, dass** das Verfahren zwischen dem Schritt (a) und dem Schritt (b) ferner einen Schritt (1) des Zurückgewinnens der Siliciumcarbidrohmaterialmischung durch Herausfiltern der Kugeln für eine Kugelmühle unter Verwendung eines Siebs beinhaltet; und
einen Schritt (2) des Messens der Menge der zurückgewonnenen Mischung in einem Graphittiegel, wobei der Schritt (a) eine Kugelmühle als einen Mischer verwendet, **gekennzeichnet durch** den Schritt des Produzierens einer Siliciumcarbidmischung durch Mischen von SiO, Kohlenstoffquellen und Kugeln für eine Kugelmühle.

## Revendications

1. Procédé de fabrication d'un corps pulvérulent en carbure de silicium, comprenant :
- une étape (a) de production d'un mélange de matière première de carbure de silicium par mélange d'une poudre de SiO et de sources de carbone dans un mélangeur ; et
- une étape (b) d'obtention d'un corps pulvérulent de carbure de silicium par traitement thermique du mélange à une température de 1400 °C et plus et 1700 °C et moins et pendant 30 minutes et plus et 7 heures et moins dans un creuset,
**caractérisé en ce que**, dans l'étape (a), un rapport molaire de mélange du carbone (C) versus le silicium (Si) est de 1,3 et plus et de 1,8 et moins.

2. Procédé selon la revendication 1, **caractérisé en ce que** dans l'étape (a), la source de carbone est le noir de carbone.

3. Procédé selon la revendication 1, **caractérisé en ce que** le procédé, entre l'étape (a) et l'étape (b), comprend en outre une étape (1) de récupération de la matière première de carbure de silicium par filtration des boulets pour un broyeur à boulets à l'aide d'un crible ; et une étape (2) de mesure de la quantité du mélange récupéré dans un creuset en graphite, dans lequel l'étape (a) utilise un broyeur à boulets en tant que mélangeur, **caractérisé par** l'étape de production d'un mélange de carbure de silicium par mélange de SiO, de sources de carbone, et de boulets pour un broyeur à boulets.
